# EUROPÄISCHE PATENTSCHRIFT

(11) **EP 3 080 656 B1**
(45) Veröffentlichungstag und Bekanntmachung des Hinweises auf die Patenterteilung: **05.02.2020**
(21) Anmeldenummer: 14812160.1
(22) Anmeldetag: 03.12.2014
(51) Int. Cl.: G02B 27/64, H04N 5/225, H04N 5/349, G02B 21/36

(54) **BILDAUFNAHMEVORRICHTUNG MIT EINER VERSCHIEBEEINRICHTUNG FÜR EIN DIGITALMIKROSKOP UND DIGITALMIKROSKOP**
IMAGE CAPTURING DEVICE WITH A MOVING DEVICE FOR A DIGITAL MICROSCOPE, AND DIGITAL MICROSCOPE
DISPOSITIF DE PRISE DE VUES ÉQUIPÉ D'UN MÉCANISME DE DÉPLACEMENT POUR MICROSCOPE NUMÉRIQUE ET MICROSCOPE NUMÉRIQUE

(30) Priorität: 09.12.2013 DE 102013225287
(43) Veröffentlichungstag der Anmeldung: 19.10.2016
(73) Patentinhaber: Carl Zeiss Microscopy GmbH, 07745 Jena (DE)
(72) Erfinder: WINTEROT, Johannes, 07745 Jena (DE); WOLF, Uwe, 99441 Magdala (DE)
(74) Vertreter: Müller, Silke
(86) Internationale Anmeldenummer: PCT/EP2014/076327
(87) Internationale Veröffentlichungsnummer: WO 2015/086387

(56) Entgegenhaltungen:
- JP-A- 2003 098 059
- JP-A- 2006 140 626
- JP-A- 2007 006 031
- US-A1- 2001 004 420
- US-A1- 2004 075 870
- US-A1- 2007 177 113
- US-A1- 2011 025 875

## Beschreibung

Die Erfindung betrifft ein Digitalmikroskop mit einer Bildaufnahmevorrichtung mit einer Verschiebeeinrichtung (Pixel-Shift-Einheit) zur relativen Verschiebung einer Abbildung einer Probe auf einem Kamerasensor parallel zu einer Bildebene.

Die Pixel-Shift-Technologie wird seit einiger Zeit Insbesondere im Digitalkamerasektor verwendet, um eine Verbesserung der Auflösung und der Bildqualität zu erreichen. Das Verfahren wird genutzt zur Bildstabilisierung, zur Auflösungssteigerung und zu Absicherung der Farbinformationen für Sensoren mit Farbpixeln. Derzeit gibt es vielfältige Anwendungen auch in der Mikroskopie.

Bei der Pixel-Shift-Technologie, wie sie in der vorliegenden Anmeldung verstanden werden soll, werden mit dem Kamerasensor zwei oder mehr Aufnahmen gemacht, bei denen die optische Abbildung des Objektes relativ zum Kamerasensor um ein Pixel oder weniger in horizontaler und/oder vertikaler Richtung verschoben und damit auf einer leicht verschobenen Region des Kamerasensors abgebildet wird. Dabei kann entweder der Kamerasensor oder ein optisches Element aktiv bewegt werden. Aus den aufgenommenen Einzelbildern wird dann ein qualitativ besseres Bild mit bekannten Bildverarbeitungsverfahren berechnet.

Aus der JP 2012-163910 A ist ein Mikroskop bekannt, bei dem eine Bildverschiebevorrichtung zur Auflösungssteigerung im optischen Pfad angeordnet ist. Diese verschiebt die optische Abbildung entsprechend der Vorgaben eines Aktuators. Ein Parallelplattenglas mit Vorsprüngen wird durch einen drehbaren Nockenring geneigt. Der Nockenring wird durch einen Motor angetrieben. Die Herstellung des Parallelplattenglases mit den Vorsprüngen ist relativ aufwendig. Die Positionen der Vorsprünge definieren den Verschiebeweg fest. Als schnellere Alternative zum Nockenring wird die Verwendung von DMD's (Digital Micromirror Devices) vorgeschlagen, durch deren Neigung der Verschiebeweg der optischen Abbildung eingestellt wird. Verschiedene Möglichkeiten sind unter dem Begriff Microscanning zusammengefasst.

Die DE 69 528 915 T2 beschreibt ein Pixelshift-Verfahren für eine Kamera, bei der zur Verschiebung des Bildes ein Spiegel oder ein Drehprisma gekippt oder eine Linsengruppe vertikal verschoben wird. Bei diesem Verfahren ist es möglich den Betriebsmodus der Kamera und damit entweder eine Bildstabilisierung oder eine gesteigerte Auflösung zu wählen.

Aus der JP 2008 065 340 A ist ein Mikroskop mit zwei Bildaufnahmevorrichtungen in High- und Low-Speed und mit einem vom Mikroskop separierten Objektiv bekannt- das Objektiv ist mittels einer komplizierten Mechanik durch Antriebe bewegbar, um Bewegungen des Objektes aus den Bildern herauszurechnen. Die Bewegung des gesamten Objektivs kann nur vergleichsweise langsam erfolgen.

JP 2012 163 616 zeigt ein Zoomobjektiv, das Pixelshift zur Bildstabilisierung verwendet. Das Zoomobjektiv umfasst mehrere Linsengruppen, von denen eine bewegbar ist. Ein Schwingungsdetektor erfasst Vibrationen des Zooms und ein Aktuator wird in Abhängigkeit der Schwingungen geregelt, um eine Linsengruppe senkrecht zur optischen Achse zu bewegen.

Aus der US 2011/0025875 A1 ist eine Kamera mit einem Pixelshift-Mechanismus bekannt, bei der eine Linse mit einen Antriebsmechanismus versehen ist. Die Linsenfassung ist mittels Federn und Piezoaktoren in einem Gehäuse oder Rahmen beweglich gelagert.

JP 2003 098059 A und US 2004075870 A1 zeigen einen Pixelshift-Mechanismus, bei der ein Bildsensor einer Kamera in einem monolithischen Basiskörper mit Festkörpergelenken gelagert ist und mittels Piezoaktoren zum Zwecke des Pixelshift in der Bildebene verschoben wird.

Aus der US 6 397 008 B2 ist eine Kamera mit einem Bildstabilisator bekannt. Die Bewegung der Kamera wird mittels Beschleunigungssensoren ermittelt und daraus die Steuerung des Aktuators zur Linsenbewegung bestimmt. Die Linse ist mittels Gleitlagerungen in drei Punkten federnd gelagert.

Die Aufgabe der Erfindung besteht darin, eine Bildaufnahmevorrichtung für ein Digitalmikroskop zu schaffen, die eine schnelle und äußerst genau arbeitende und preiswert herstellbare Pixel-Shift-Vorrichtung umfasst.

Die Aufgabe wird durch ein Digitalmikroskop mit den Merkmalen des Anspruchs 1 gelöst.

Eine Bildaufnahmevorrichtung für ein Digitalmikroskop umfasst zunächst in bekannter Weise einen Kamerasensor zur Erfassung eines Abbildes einer Probe, eine Optikeinheit zur Erzeugung des Abbildes der Probe auf dem Kamerasensor und eine Verschiebeeinrichtung zum Verschieben der Abbildung auf dem Kamerasensor. Die Verschiebeeinrichtung umfasst dabei einen Antrieb zum relativen Verschieben mindestens eines Teils einer beweglich gelagerten Linsengruppe der Optikeinheit. Erfindungsgemäß ist der erste Antrieb über ein in der Verschiebeinrichtung ausgebildetes erstes Festkörpergelenk mit dem beweglich gelagerten Teil der Linsengruppe gekoppelt.

Ein erfindungsgemäßes Digitalmikroskop umfasst eine solche Bildaufnahmevorrichtung.

Der Kamerasensor ist in einer bevorzugten Ausführungsform ein CMOS-Sensor, es kann aber jeder andere geeignete Kamerasensor ebenfalls verwendet werden. Beispielsweise könne der Sensor auch ein CCD-Sensor mit einem Bayer-Pattern sein.

Die Optikeinheit ist vorzugsweise Teil der ohnehin im Digitalmikroskop benötigten Optik, welche ein Objektiv und eine Zoombaugruppe umfasst. In den meisten Ausführungsformen werden Objektiv und Zoombaugruppe räumlich getrennte Baugruppen darstellen, wobei die Zoombaugruppe in eine so genannte "optical engine" integriert ist oder sein kann, die zusätzlich auch Steuerungs- und Bildverarbeitungskomponenten des Digitalmikroskopes umfasst. Es ist aber ebenso möglich und von der Erfindung mit eingeschlossen, die Zoombaugruppe beispielsweise in das Objektiv zu integrieren.

Erfindungsgemäß ist die Verschiebeeinrichtung (Pixel-Shift-Einheit) in eine bewegliche Linsengruppe der Optikeinheit integriert, wobei mindestens ein Teil der Linsengruppe durch einen ersten Antrieb, der vorzugsweise ein Piezoaktor ist, aktiv senkrecht zu einer optischen Achse verschiebbar ist und der erste Antrieb mittels eines Festkörpergelenkes mit dem verschiebbaren Teil der Linsengruppe gekoppelt ist. Der Piezoaktor kann dabei auch ein Stapel von Einzel-Piezoaktoren sein.

Unter einem Festkörpergelenk im Sinne dieser Erfindung wird eine monolithische Struktur mit einem gezielten Verformungsverhalten verstanden, welche zumindest den beweglichen Teil der Linsengruppe trägt bzw. aufnimmt und einen Angriffspunkt für den Piezoaktor aufweist.

Gemäß der Erfindung ist das Festkörpergelenk in einem monolithischen Basiskörper ausgebildet, in dessen radial zentralem Bereich der bewegbare Teil der Linsengruppe in einer Linsenöffnung gelagert ist und in dessen radial peripheren Aktorbereich ein Angriffspunkt für den ersten Antrieb vorgesehen ist
Eine besonders vorteilhafte Verschiebeeinrichtung wird durch eine monolithisch aufgebauten Basiskörper in Form einer Platte oder Scheibe gebildet, welche die Linsengruppe in einem vorzugsweise zentralen Optikbereich und den Antrieb/Piezoaktor in einem vorzugsweise peripheren Aktorbereich trägt. Dabei ist das Festkörpergelenk durch definierte Materialaussparungen in der Platte bzw. Scheibe gebildet. Es erlaubt eine Relativbewegung zwischen dem Optikbereich und dem Aktorbereich durch reversible Biegung.

Solche Festkörpergelenke können mit Hilfe bekannter FEM-Simulationen aus verschiedenen Materialien dimensioniert werden.

Erfindungsgemäß ist ein zweiter Antrieb bzw. Piezoaktor vorgesehen sein, um eine Bewegung der Linsengruppe oder zumindest eines Teiles davon in einer zweiten Richtung parallel zur Ebene des Kamerasensors zu ermöglichen. Selbstverständlich können auch einzelne Linsen der Linsengruppe mit jeweils um 90° zueinander versetzt angeordneten Antrieben bzw. Piezoaktoren bewegt werden.

Gemäß der Erfindung ist die bewegliche Linsengruppe Teil einer separaten Zoombaugruppe.

In einer weiteren Ausführungsform kann die bewegliche Linsengruppe als komplette Linsengruppe in dem Basiskörper/ der Pixel-Shift-Einheit gelagert sein. Dabei ist die Pixel-Shift-Einheit vorzugsweise als ein Zweiachsen-System konzipiert, das sowohl die Linsengruppe oder zumindest einen Teil davon aufnimmt, als auch den oder die Antriebe bzw. Piezoaktoren, wobei zwischen diesen Baugruppen das Festkörpergelenk angeordnet ist.

Die Bildaufnahmevorrichtung umfasst ein einer weiteren vorteilhaften Ausführungsform mit zwei Antrieben weiterhin eine Regeleinheit, die den ersten und den zweiten Antrieb derart ansteuert, dass in einer fortlaufenden Schleife nacheinander die Abbildung in drei verschiedene bestimmte Pixel-Shilft-Positionen verschoben wird, wobei jeweils eine Bildaufnahme mit dem Kamerasensor nach Erreichen jeder Pixel-Shift-Position erfolgt. In einer Bildverarbeitungseinheit werden diese Einzelaufnahmen zu einem hochaufgelösten Bild berechnet. Weiterhin werden in bekannter Weise die Informationen der Einzelaufnahmen für verschieden Farb-, Kanten- und Bildkorrekturen verwendet.

Bevorzugte Ausführungsformen der Erfindung werden nachfolgend anhand der Figuren näher erläutert. Dabei zeigen:
- Fig. 1:: eine erste bevorzugte Ausführungsform eines Festkörpergelenkes für eine Verschiebeeinrichtung (Pixel-Shift-Einheit);
- Fig. 2:: eine vergrößerte Detaildarstellung mit verschiedenen Lagen des Festkörpergelenkes gemäß Fig. 1;
- Fig. 3:: eine Verschiebeeinrichtung mit einem Festkörpergelenk nach Fig. 1;
- Fig. 4:: eine Darstellung eines Teils eines Digitalmikroskopes mit der in Fig. 3 dargestellten Verschiebeeinrichtung;

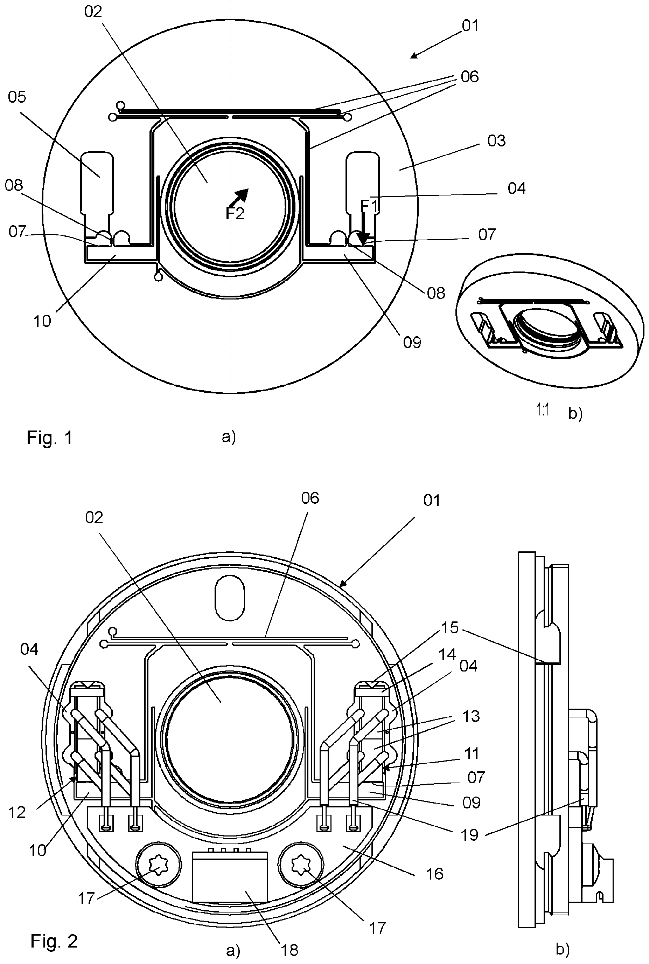

In Figur 1 ist eine erste bevorzugte Ausführungsform eines Festkörpergelenkes für eine Verschiebeeinrichtung in einer Draufsicht (Abb. a) und einer räumlichen Ansicht (Abb. b) dargestellt. Ein monolithischer Basiskörper 01 ist scheibenförmig und weist in seinem zentralen Bereich eine Linsenöffnung 02 auf, in der eine Linse oder eine Linsengruppe (nicht dargestellt) aufnehmbar ist. In der dargestellten Ausführungsform ist der Basiskörper 01 aus einer ca. 5 mm starken Aluminiumplatte gefertigt. Diese Ausführungsform bietet vorteilhafterweise eine gute Steifigkeit, Haltbarkeit und günstige Voraussetzungen für eine Linsenfassung. Eine Bearbeitung mittels erosiven Verfahren ist möglich.

In alternativen Ausführungsformen sind andere Materialien, wie beispielsweise Kunststoff (ggf. faserverstärkt) oder andere Materialien verwendbar. Die Dimensionierung ist entsprechend der Materialwahl anzupassen.

in einem peripheren Bereich 03 des Basiskörpers 01 sind zwei Ausnehmungen 04, 05 zur Aufnahme von Piezoaktoren angeordnet. Dem Fachmann wird klar sein, dass an dieser Stelle prinzipiell auch jeder andere geeignete Antrieb verwendbar ist, der beispielsweise durch eine drehbare Kurvenscheibe oder einen Nocken oder andersartig gebildet sein kann.

Zwischen den Ausnehmungen 04, 05 und dem zentralen Bereich, also der Linsenöffnung 02 sind axial durchgehende Schlitze 06 in den Basiskörper 01 eingearbeitet, um das Festkörpergelenk zu bilden. Dabei ist je Ausnehmung 04, 05 eine Angriffsfläche 07 vorgesehen, auf den eine Kraftwirkung durch den ausgedehnten Piezoaktor erfolgt.

Durch eine mechanische Vorspannung des Festkörpergelenkes und das Zusammenwirken jeweils eines um einen Drehpunkt 08 schwenkbaren Hebels 09, 10 mit den Schlitzen 06 im Basiskörper 01 bewegt sich die Linsenöffnung 02 entsprechend der Dimensionierung des Festköpergelenkes.

In einer abgewandelten Ausführungsform könnte an jeder Seite der Hebel 9, 10 ein Piezoaktor angeordnet sein, so dass eine aktive Hebelbewegung in beide Richtungen durch die Ansteuerung jeweils eines der Piezoaktoren erreicht wird.

Durch die Wirkung der verschiedenen Hebel innerhalb des Festkörpergelenkes kann eine Optimierung des Stellweges für den jeweiligen Piezoaktor erfolgen. Durch die Dimensionierung der Hebel 09, 10 und Schlitze 06 ist auch eine Auswahl des Piezoaktors hinsichtlich seiner Kraftwirkung möglich. Dabei ist darauf zu achten, dass mit erhöhter Kraftwirkung ein verringerter Stellweg möglich ist. Der Fachmann wird den für das Festkörpergelenk geeigneten Piezoaktor auswählen und dimensionieren können.

Das Festkörpergelenk wird in dieser Ausführungsform durch zwischen den Schlitzen 06 verbleibende Blattfedern, die Hebel 9, 10 und die Drehpunkte 08 gebildet.

Im dargestellten Fall würde eine Kraft F1 eines ersten Piezoaktors mittels des Festkörpergelenkes auf die Linsenöffnung übertragen und dort eine Bewegung in Richtung F2 (um 135° gedreht) auslösen. Dabei handelt es sich um Bewegungen im Mikrometerbereich, die anhand der Figur nicht maßstabsgetreu darstellbar sind. Die dargestellten Kraftpfeile F1 und F2 dienen lediglich der prinzipiellen Anschauung, deren Länge steht in keiner Beziehung zur ausgeübten Kraft oder Distanz der Bewegung.

Soll beispielsweise die Linsenöffnung 02 in Richtung 12 Uhr bewegt werden, so müssen beide Hebel 09 und 10 in Richtung 6 Uhr, also durch Ausdehnen der (zwei) Antriebe bewegt werden.

Grundsätzlich ist das Festkörpergelenk bzw. die Linsenfassung so gestaltet, dass ein seitlicher bzw. dezentraler Krafteintrag F1 eine um 135° (im mathematisch positiven Drehsinn) dazu gedrehte resultierende Bewegung in die Richtung F2 ergibt (aus dem Zentrum heraus). Durch Krafteintrag des gegenüberliegenden zweiten Piezoaktors auf den Hebel 10 wird eine 90° verschobene Bewegung zur vorherigen Richtung F2 erreicht. Dadurch kann man durch gezielte Ansteuerung der gegenüberliegenden Piezoaktoren eine exakte und symmetrische und lineare Verstellung der Linse in zwei senkrecht zueinander und senkrecht zur optischen Achse stehenden Richtungen erzeugen.

Für einen Pixel-Shift-Zyklus ist die Linsenöffnung in an sich bekannter Weise in der entsprechenden Anzahl Schritte zu verschieben. Ein entsprechender Algorithmus muss bei der Ansteuerung und Auslenkung der Piezoaktoren gewählt werden.

Fig. 2 zeigt eine Verschiebeeinrichtung mit dem in Fig. 1 bereits erläuterten Basiskörper 01 in einer Draufsicht (Abb. a) und einer Seitenansicht (Abb. b).

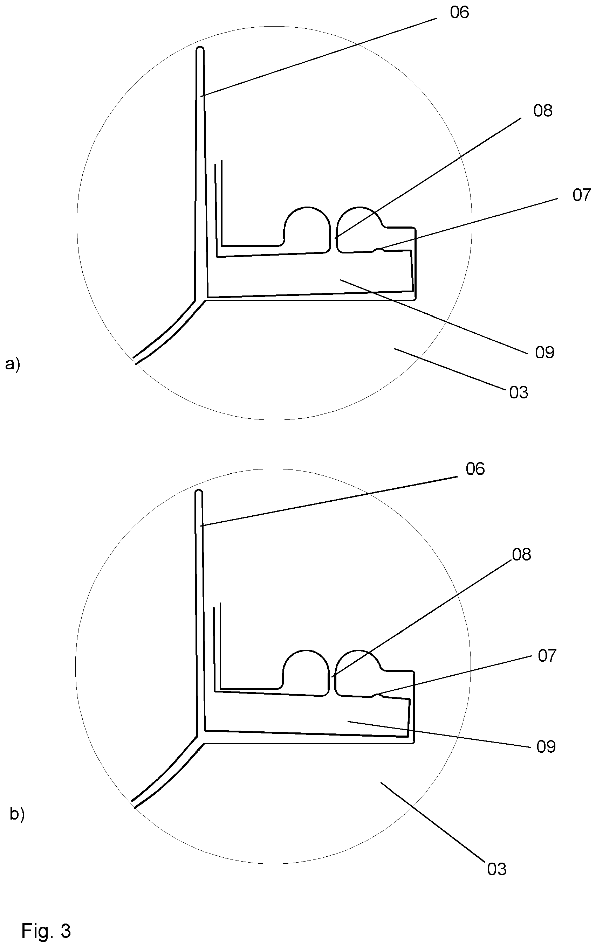

In den beiden Ausnehmungen 04 und 05 ist jeweils ein Stapel 11, 12 aus zwei Piezoaktoren 13 aufgenommen. Die Stapel 11, 12 sind jeweils mittels einer Platte 14 und einem in der Basisplatte 01 gehaltenen Gewindestift 15 mit einer bestimmten Vorspannung beaufschlagt (siehe Fig. 3b).

Selbstverständlich können in alternativen Ausführungsformen Piezoaktoren mit integrierter Vorspannung oder Anordnungen mit aktiver Vorspannung (zwei gegeneinander arbeitende Aktoren - symmetrisch wirkende push-pull-Antriebe) verwendet werden.

Eine Leiterplatte 16 ist vorzugsweise mittels Schrauben 17 auf dem Basiskörper 01 befestigt. Auf der Leiterplatte 16 sind eine elektronische Ansteuerschaltung 18, sowie Leitungen 19 zu den Piezoaktoren 13 vorgesehen.

Fig. 3 zeigt in einer nicht maßstabsgetreuen Detaildarstellung zwei Endlagen (Abb. a und b) des Hebels 9 gemäß Fig. 1. Dabei ist in Abb. a eine vorgespannte erste Endlage und in Abb. b eine zweite Endlage dargestellt. Die erste Endlage wird bei der Montage der Pixel-Shift-Einheit durch mechanisches Vorspannen mittels des Gewindestiftes 15 eingestellt. Dabei soll möglichst keine Berührung des Hebels 09 mit dem Peripheriebereich 03 erfolgen. Abb. b zeigt die zweite Endlage des Hebels 09, welche durch Aktivierung bzw. volle Auslenkung des (hier nicht gezeigten) Stapels 11 angesteuert werden kann.

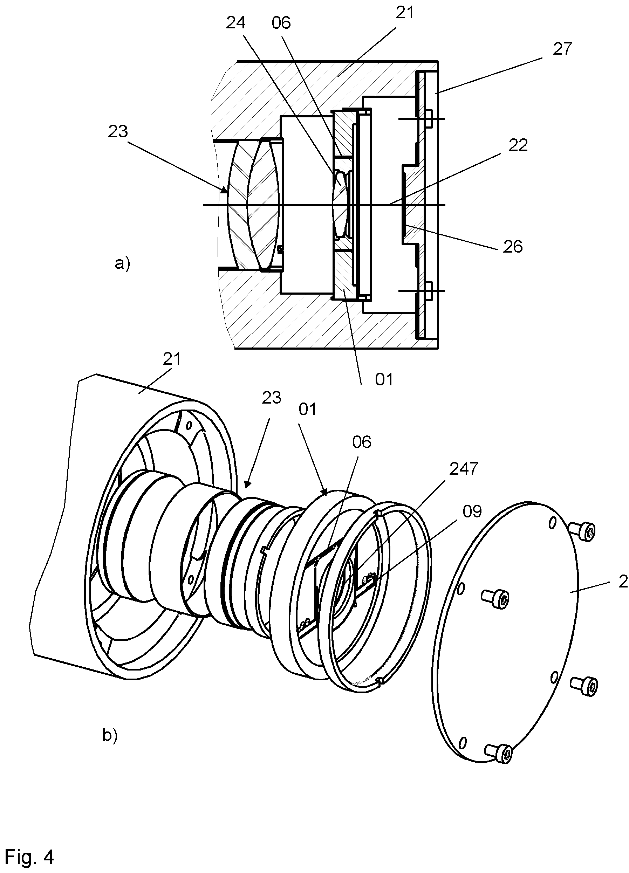

In Fig. 4 ist die zuvor beschriebene Verschiebeeirichtung in eine Optikeinheit eines Digitalmikroskops integriert dargestellt. Gezeigt ist lediglich ein Abschnitt eines Hauptgehäuses in einer Längsschnittdarstellung (Abb. a) und einer Explosionsdarstellung (Abb. b).

In einem zylindrischen Gehäuse 21 sind in einer optischen Achse 22 angeordnet eine axial verschiebbare Linsengruppe 23, eine senkrecht zur optischen Achse 22 bewegliche Linsengruppe 24 und ein Kamerasensor 26 auf einer Basisplatte 27.

Die Linsengruppe 24 ist eine PLUS-MINUS-Gruppe, die in dem der Basiskörper 01 der Verschiebeeinrichtung gelagert ist.

### Bezugszeichenliste

- 01: Basiskörper
- 02: Öffnung
- 03: peripherer Bereich
- 04: Ausnehmung
- 05: Ausnehmung
- 06: Schlitz
- 07: Angriffsfläche
- 08: Drehpunkt
- 09: Hebel
- 10: Hebel
- 11: Stapel
- 12: Piezoaktor
- 13: Piezoaktor
- 14: Platte
- 15: Gewindestift
- 16: Leiterplatte
- 17: Schraube
- 18: Ansteuerschaltung
- 19: Leitung
- 20: -
- 21: Gehäuse
- 22: optische Achse
- 23: Linsengruppe
- 24: Linsengruppe
- 25: -
- 26: Kamerasensor
- 27: Basisplatte
- 28: -
- 29: -

## Patentansprüche

1. Digitalmikroskop mit einem Objektiv, einer Zoombaugruppe und einer Bildaufnahmevorrichtung, wobei die Bildaufnahmevorrichtung umfasst:
- einen Kamerasensor (26),
- eine Optikeinheit zur Abbildung einer Probe in einer Bildebene auf dem Kamerasensor (26) mit mindestens einer senkrecht zur optischen Achse beweglich gelagerten Linsengruppe (24),
- eine Verschiebeeinrichtung mit einem ersten Antrieb zur relativen Verschiebung mindestens eines Teils der Linsengruppe (24) und damit zur relativen Verschiebung der Abbildung der Probe auf dem Kamerasensor (26) parallel zur Bildebene, wobei die Verschiebeeinrichtung ein monolithischer Basiskörper (01) mit einem Zweiachsensystem ist, dessen zentrale Plattform beweglich ist und in dessen Peripherie der erste Antrieb und ein zweiter Antrieb gelagert sind, wobei zwischen der zentralen Plattform und der Peripherie zwei Festkörpergelenke ausgebildet sind, und wobei in der Peripherie in einem Aktorbereich (03) Angriffsflächen (07) für die Antriebe ausgebildet sind;
wobei die zentrale Plattform eine Linsenfassung bildet, in der der beweglich gelagerte Teil der Linsengruppe (24) gelagert ist, und wobei die Linsengruppe (24) in die Zoombaugruppe des Digitalmikroskopes integriert ist und das Digitalmikroskop eingerichtet ist, die Linsenfassung zum Ausführen eines Pixel-Shifts mit der Verschiebeeinrichtung zu bewegen.

2. Digitalmikroskop nach Anspruch 1, **dadurch gekennzeichnet, dass** der monolithische Basiskörper (01) scheibenförmig ist und Schlitze (06) aufweist, die zumindest abschnittsweise um die Linsenöffnung (02) herum bis zu einem Hebel (9, 10), der die Angriffsfläche (07) für den ersten Antrieb aufweist, verlaufen.

3. Digitalmikroskop nach einem der Ansprüche 1 bis 2, **dadurch gekennzeichnet, dass** die Festkörpergelenke mechanisch um einen Auslenkungsweg des Antriebes vorgespannt sind.

4. Digitalmikroskop nach Anspruch 1, **dadurch gekennzeichnet, dass** sie eine Regeleinheit umfasst, die den ersten und den zweiten Antrieb derart ansteuert, dass in einer fortlaufenden Schleife nacheinander die Abbildung in drei verschiedene bestimmte Pixel-Shift-Positionen verschoben wird, wobei jeweils eine Bildaufnahme mit dem Kamerasensor nach Erreichen jeder Pixel-Shift-Position erfolgt.

5. Digitalmikroskop nach einem der Ansprüche 1 bis 4, **dadurch gekennzeichnet, dass** die bewegliche Linsengruppe (24) eine PLUS-MINUS-Gruppe ist.

## Claims

1. Digital microscope having an objective, a zoom assembly and an image-capturing device, wherein the image-capturing device comprises:
- a camera sensor (26),
- an optical unit for imaging a sample in an image plane on the camera sensor (26), said optical unit comprising at least one lens group (24) which is mounted so as to be movable perpendicularly with respect to the optical axis,
- a moving device with a first drive for the relative movement of at least one part of the lens group (24,) and thus for the relative movement of the imaging of the sample on the camera sensor (26) parallel to the image plane, wherein the moving device is a monolithic base body (01) having a two-axis system, of which the central platform is movable, and in the periphery of which the first drive and a second drive are mounted, wherein two flexure bearings are formed between the central platform and the periphery, and wherein in the periphery in an actuator area (03) contact surfaces (07) for the drive are formed;
wherein the central platform forms a lens mount in which the movably mounted part of the lens group (24) is mounted and wherein the lens group (24) is integrated in the zoom assembly of the digital microscope and the digital microscope is configured to move the lens mount in order to carry out a pixel shift with the moving device.

2. Digital microscope according to Claim 1, **characterized in that** the monolithic base body (01) is disk-shaped and has slits (06) which extend at least in part around the lens opening (02) as far as a lever (9, 10), which has the contact surface (07) for the first drive.

3. Digital microscope according to either of Claims 1 and 2, **characterized in that** the flexure bearings are mechanically pretensioned about an excursion path of the drive.

4. Digital microscope according to Claim 1, **characterized in that** it comprises a regulating unit which controls the first and the second drive in such a way that the imaging is moved to three different defined pixel shift positions successively in a continuous loop, wherein in each case one image is taken with the camera sensor after each pixel shift position is reached.

5. Digital microscope according to one of Claims 1 to 4, **characterized in that** the movable lens group (24) is a PLUS-MINUS group.

## Revendications

1. Microscope numérique comprenant un objectif, un sous-ensemble de zoom et un arrangement de capture d'image,
l'arrangement de capture d'image comprenant :
- un capteur de caméra (26),
- une unité optique destinée à représenter un échantillon dans un plan d'image sur le capteur de caméra (26) et comportant au moins un groupe de lentilles (24) monté mobile perpendiculairement à l'axe optique,
- un dispositif de translation
comprenant un premier mécanisme d'entraînement servant à la translation relative d'au moins une partie du groupe de lentilles (24) et ainsi à la translation relative de la représentation de l'échantillon sur le capteur de caméra (26) parallèlement au plan d'image, le dispositif de translation étant un corps de base monolithique (01) avec un système à deux axes dont la plate-forme centrale est mobile et dans la périphérie duquel sont montés le premier mécanisme d'entraînement et un deuxième mécanisme d'entraînement, deux articulations monolithiques étant formées entre la plate-forme centrale et la périphérie, et des surfaces d'attaque (07) pour les mécanismes d'entraînement étant formées dans la périphérie dans une zone d'actionneur (03) ;
la plate-forme centrale formant une monture de lentilles dans laquelle est montée la partie montée mobile du groupe de lentilles (24), et le groupe de lentilles (24) étant intégré dans le sous-ensemble de zoom du microscope numérique et le microscope numérique étant conçu pour déplacer la monture de lentilles avec le dispositif de translation en vue d'exécuter un décalage de pixels.

2. Microscope numérique selon la revendication 1, **caractérisé en ce que** le corps de base monolithique (01) est en forme de disque et possède des fentes (06) qui s'étendent, au moins dans certaines portions, autour de l'ouverture de lentille (02) jusqu'à un levier (9, 10) qui possède la surface d'attaque (07) pour le premier mécanisme d'entraînement.

3. Microscope numérique selon l'une des revendications 1 et 2, **caractérisé en ce que** les articulations monolithiques sont précontraintes mécaniquement autour d'une course de déviation du mécanisme d'entraînement.

4. Microscope numérique selon la revendication 1, **caractérisé en ce qu'**il comporte une unité de régulation qui commande le premier et le deuxième mécanisme d'entraînement de telle sorte que dans une boucle continue, la représentation est décalée successivement dans trois positions de décalage de pixel déterminées différentes, une capture d'image étant respectivement effectuée avec le capteur de caméra après avoir atteint chaque position de décalage de pixel.

5. Microscope numérique selon l'une des revendications 1 à 4, **caractérisé en ce que** le groupe de lentilles (24) mobile est un groupe PLUS-MOINS.
